# FASCICULE DE BREVET EUROPEEN

(11) **EP 3 224 139 B1**
(45) Date de publication et mention de la délivrance du brevet: **05.08.2020**
(21) Numéro de dépôt: 15817451.6
(22) Date de dépôt: 24.11.2015
(51) Int. Cl.: B64C 25/06, B64C 25/58

(54) **TRAIN D'ATTERRISSAGE POUR AVION LEGER, COMPRENANT AU MOINS DEUX ROUES**
FAHRWERK FÜR LEICHTFLUZEUG MIT MINDESTENS ZWEI RÄDERN
LANDING GEAR FOR LIGHT AIRCRAFT, COMPRISING AT LEAST TWO WHEELS

(30) Priorité: 24.11.2014 FR 1461324
(43) Date de publication de la demande: 04.10.2017
(73) Titulaire: Beringer Aero, 05130 Tallard (FR)
(72) Inventeur: BERINGER, Rémi, 05130 Tallard (FR)
(74) Mandataire: Cabinet Laurent & Charras
(86) Numéro de dépôt international: PCT/FR2015/053191
(87) Numéro de publication internationale: WO 2016/083726

(56) Documents cités:
- DE-C- 351 269
- GB-A- 242 599
- US-A- 1 531 619
- US-A- 1 557 242
- US-A- 1 622 799
- US-A- 2 233 191

## Description

L'invention se rattache au secteur technique de l'aviation générale, et concerne plus particulièrement les avions légers, généralement inférieurs à 5,7 tonnes, du type Piper Cub ®, Supercub ®, et dérivés. Plus particulièrement, l'invention concerne un train d'atterrissage pour ce type d'avions.

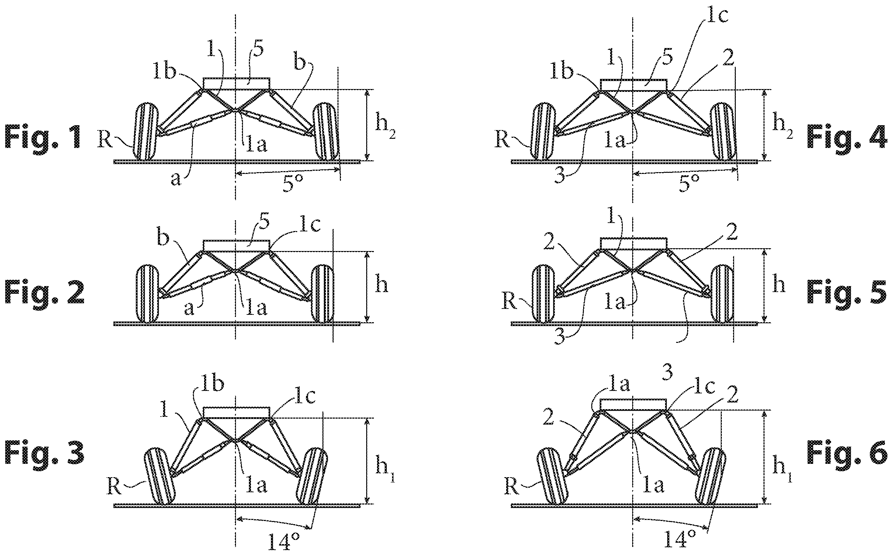

Selon l'état de la technique, les trains d'atterrissage de ces avions légers, du type Piper ®, comprennent essentiellement un renfort, de forme générale triangulaire, fixé sur une partie du fuselage à l'avant du centre de gravité. Ce renfort, généralement réalisé à partir d'éléments tubulaires, présente un angle au sommet compris entre 90 et 120° environ, lequel sommet, après fixation du renfort, est dirigé vers le bas, c'est-à-dire, en direction du sol. Les extrémités de la base du renfort et son sommet sont accouplés, avec capacité d'articulation, à un système de barres et d'amortisseurs reliés aux roues de l'avion. Par exemple, comme le montrent les figures 1, 2 et 3, le sommet (1a) du renfort (1) est accouplé à libre articulation, et d'une manière symétrique, à chacune des roues (R) de l'avion, au moyen d'un organe amortisseur (a). Chaque extrémité (1b) et (1c) de la base du renfort (1), est accouplée angulairement à chacune des roues (R), au moyen d'une barre de compression (b). Compte tenu de cette conception du train d'atterrissage, il apparaît que ce dernier ne permet pas d'absorber l'énergie au moment de l'impact, mais est seulement capable de la restituer. Il en résulte un ripage des pneumatiques, et des efforts importants encaissés par le fuselage au moment de l'impact au sol, en considérant la mauvaise qualité de l'amortissement des chocs.

Par ailleurs, le document US 2 233 191 décrit un train d'atterrissage pour avion léger, comportant un renfort tubulaire fixe de forme générale triangulaire dont le sommet est dirigé vers le bas, et un renfort vertical plan à l'extrémité inférieure duquel est fixée une platine, sous le sommet du renfort tubulaire. Un tel système de renfort présente une structure relativement complexe.

Les extrémités de la base du renfort tubulaire et la platine fixée au renfort plan sont accouplées, avec capacité d'articulation, à un système de suspension relié aux roues. Chaque extrémité de la base du renfort tubulaire est accouplée angulairement à une roue au moyen d'un organe amortisseur, tandis que la platine fixée au renfort plan est reliée à chaque roue par une barre de torsion relativement fine.

Chaque organe amortisseur comprend un fut articulé sur le renfort tubulaire, et un piston solidaire d'une fusée supportant la roue. Le fut comporte une fourche munie de deux branches en matériau composite, de construction relativement complexe et onéreuse. Chaque extrémité de la base du renfort tubulaire comprend deux paires de pattes espacées, entre lesquelles sont montées les deux branches de la fourche, avec capacité d'articulation. Le couple de torsion transmis de chaque roue au fuselage est repris, d'une part, au sein de l'organe amortisseur et, d'autre part, au niveau de l'articulation entre la fourche et les pattes espacées.

De telles paires de pattes espacées n'équipent généralement pas le fuselage d'origine des avions légers, tels que les Piper Cub ®. Autrement dit, une modification du fuselage d'origine est nécessaire pour monter le train d'atterrissage sur l'avion, ce qui complique l'installation dudit train. Entre outre, le risque d'accident en service augmente si une telle modification n'est pas parfaitement exécutée.

L'invention s'est fixée pour but de remédier aux inconvénients ci-dessus d'une manière simple, sûre, efficace et rationnelle.

Le problème que se propose de résoudre l'invention est de proposer un train d'atterrissage pour ce type d'avions légers, apte à absorber l'énergie de l'impact, avec pour objectif, notamment, d'améliorer la sécurité lors de l'atterrissage.

Pour résoudre un tel problème, il a été conçu et mis au point un train d'atterrissage pour avion léger, de type Piper Cub ®, conformément aux caractéristiques de la revendication 1.

Il ressort de ces caractéristiques, que l'efficacité de l'amortissement est améliorée d'au moins 50 % par rapport à un train d'atterrissage classique, selon les caractéristiques de l'état antérieur de la technique exposé précédemment. En effet, la cinématique, telle que revendiquée, permet d'obtenir au moment du décollage, c'est-à-dire que lorsque les roues ne sont plus en contact avec le sol, une hauteur entre le fuselage et la base des roues, supérieure à celle correspondant à un train d'atterrissage, selon l'état de la technique, tandis que la hauteur entre le fuselage et la base des roues, au moment de l'atterrissage, est inférieure, selon les caractéristiques de l'invention, à celle que présente le train d'atterrissage selon l'état de la technique.

En comparaison avec le train d'atterrissage particulier décrit dans le document US 2 233 191, le train d'atterrissage selon l'invention présente une construction relativement simple et ne nécessite pas de modifier le fuselage d'origine.

Selon d'autres caractéristiques de l'invention, prises isolément ou en combinaison :
- Chaque organe amortisseur a une première extrémité accouplée avec capacité d'articulation aux extrémités de la base du renfort.
- La première extrémité de chaque organe amortisseur est accouplée avec capacité d'articulation, aux extrémités de la base du renfort, entre deux pattes espacées solidaires du fuselage.
- Chaque organe amortisseur a une deuxième extrémité accouplée angulairement, d'une manière fixe, à un agencement de la roue.
- Chaque organe amortisseur a une deuxième extrémité accouplée angulairement, d'une manière articulée, à un agencement de la roue.
- L'organe amortisseur est un vérin, constitué par un fut articulé aux extrémités de la base du renfort, et une tige coulissante accouplée à un agencement de la roue.

L'invention a également pour objet un avion léger, du type Piper Cub ®, comprenant un train d'atterrissage tel que décrit ci-dessus.

Selon un premier mode de réalisation, le train d'atterrissage est monté sur les éléments d'accroche d'origine équipant la partie de fuselage.

Selon un premier mode de réalisation, le train d'atterrissage est monté sur un support indépendant, apte à être fixé sur la partie du fuselage.

Un procédé de montage d'un train d'atterrissage tel que décrit ci-dessus, sur une partie de fuselage d'un avion léger, du type Piper Cub ®, est également divulgué.

Selon une première approche, le train d'atterrissage est monté sans modification des éléments d'accroche d'origine équipant ladite partie de fuselage.

Selon une deuxième approche, le train d'atterrissage est monté sur un support indépendant, qui est fixé sur ladite partie de fuselage.

L'invention est exposée ci-après plus en détail à l'aide des figures des dessins annexés dans lesquels :
- les figures 1, 2 et 3 sont des vues à caractère schématique d'un train d'atterrissage, selon l'état de la technique, du type de ceux équipant les avions légers, tels que les Piper Cub ®, la figure 1 montrant le train d'atterrissage, au moment de l'atterrissage, la figure 2, en position statique et la figure 3, en position de décollage, c'est-à-dire lorsque les roues s'apprêtent à quitter le sol, ou ont déjà quitté le sol.
- les figures 4, 5 et 6 sont des vues correspondant aux figures 1, 2 et 3, dans le cas d'un train d'atterrissage, selon les caractéristiques de l'invention, montrant l'efficacité de l'amortissement.
- la figure 7 est à l'échelle plus importante une vue de face du train d'atterrissage, selon les caractéristiques de l'invention,
- la figure 8 est une vue de côté, correspondante à la figure 7,
- la figure 9 est une vue partielle en plan, correspondante à la figure 8,
- les figures 10 et 11 sont des vues partielles du train d'atterrissage, au niveau de la jonction de l'organe amortisseur et de la barre de traction avec la fusée de la roue, à la figure 10, l'amortisseur est accouplé fixement à la fusée et la barre de traction est accouplée avec capacité d'articulation à ladite fusée, tandis qu'à la figure 11, l'amortisseur est accouplé à la fusée, avec capacité d'articulation, et la barre de traction est accouplée fixement à ladite fusée,
- la figure 12 est une vue partielle de la figure 7 à plus grande échelle, montrant uniquement l'organe amortisseur, la barre de traction et la roue situés sur l'un des côtés du train d'atterrissage,
- la figure 13 est une coupe selon la ligne XIII-XIII à la figure 12, montrant l'articulation entre la barre de traction et la fusée,
- la figure 14 est une vue de côté selon la flèche XIV à la figure 12,
- la figure 15 est une vue à plus grande échelle du détail XV à la figure 14,
- la figure 16 est une vue à plus grande échelle du détail XVI à la figure 14.

Comme indiqué, le train d'atterrissage, selon l'invention s'applique à tous types d'avions légers, généralement inférieurs à 5,7 tonnes, du type Piper Cub ®, par exemple, sans pour cela exclure d'autres types d'avions, tels que cités ci-après, à titre indicatif nullement limitatif, à savoir : Super Cub ®, Aviat Husky ®, Champion Aircraft ®, Legend Cub ®, Just Aircraft ®, Cub Crafters ®, Zlin Savage ®, Bearhawk Aircraft ®, Maule ®, Avid Flyer ®, etc...

On rappelle, pour une meilleure compréhension, que ce type de train d'atterrissage comprend un renfort tubulaire (1), de forme générale triangulaire, fixé sur une partie du fuselage (F), à l'avant du centre de gravité. Ce renfort triangulaire (1) est relié à libre articulation, au niveau de son sommet (1a) et au niveau de chacune des extrémités (1b) et (1c) de sa base aux roues (R) de l'avion considéré, par l'intermédiaire d'organes de suspension. Le sommet (1a) du renfort triangulaire est dirigé vers le bas, c'est-à-dire, en direction du sol. La base du renfort triangulaire est positionnée vers le haut, horizontalement, du côté du fuselage (F).

Selon l'invention, chaque extrémité (1b) et (1c) de la base de renfort (1) est accouplé angulairement à chacune des roues (R) au moyen d'un organe amortisseur (2). Le sommet (1a) du renfort (1) est accouplé symétriquement à chacune des roues, au moyen d'une barre de traction (3).

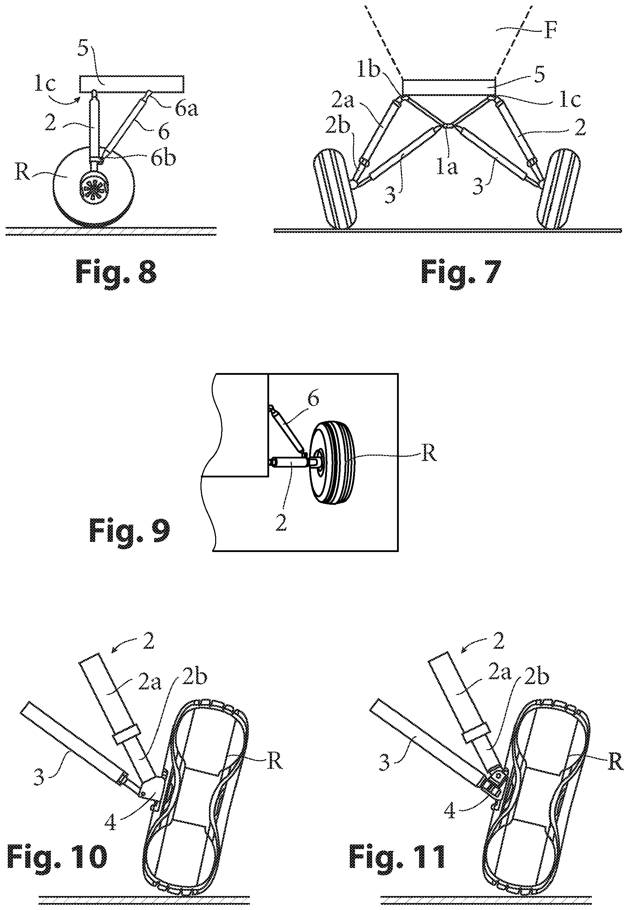

Comme le montre, notamment, la figure 7, l'une des extrémités de chaque organe amortisseur (2) est accouplée avec capacité d'articulation aux extrémités (1b) et (1c) de la base du renfort (1). L'autre extrémité de chaque organe amortisseur (2) est accouplée angulairement, d'une manière fixe, à un organe d'appui (4), telle qu'une fusée que présente le moyeu de la roue.

Par exemple, l'organe amortisseur (2) est constitué par un vérin, dont le fut (2a) est articulé aux extrémités (1b) et (1c) de la base du renfort (1), tandis que la tige coulissante (2b) du vérin est rendue solidaire de la fusée (4). Plus précisément, le fut (2a) a une extrémité supérieure (2c) articulée à l'une des extrémités (1b) ou (1c), tandis que la tige coulissante (2d) a une extrémité inférieure (2d) solidaire de la fusée (4).

Les barres de traction (3) sont accouplées à chacune de leurs extrémités avec capacité d'articulation, d'une part, au sommet (1a) du renfort (1) selon deux zones d'attaches équidistantes, et d'autre part, à la fusée (4) (figure 10).

Sans pour cela sortir du cadre de l'invention, chaque organe amortisseur (2) peut être accouplé d'une manière articulée à la fusée (4), tandis que chaque barre de traction est accouplée fixement à ladite fusée (4) (variante montrée à la figure 11).

Il résulte de ces caractéristiques spécifiques que le train d'atterrissage permet d'obtenir une amélioration significative de l'efficacité de l'amortissement, avec absorption de l'énergie de l'impact des roues avec le sol. On renvoie, à cet égard, aux différentes vues comparatives, relevant des figures 1, 2 et 3, qui montrent un train d'atterrissage classique, selon l'état antérieur de la technique, et des figures 4, 5 et 6, qui montrent un train d'atterrissage conforme aux caractéristiques de l'invention.

Dans l'exemple illustré, le train d'atterrissage délimite, en position statique, figures 2 et 5, une hauteur (h) de 750 mm considérée entre le fuselage (F) et le sol.

Au moment du décollage, c'est-à-dire lorsque les roues quittent le sol, cette hauteur (h) passe à 858 mm, avec un train d'atterrissage, selon l'état de la technique, et à 935 mm, avec un train d'atterrissage, conforme aux caractéristiques de l'invention (figures 3 et 6). Soit (h1) cette hauteur.

Au moment de l'atterrissage, c'est-à-dire lors du contact des roues avec le sol (figures 1 et 4), cette hauteur (h) est ramenée à 702 mm pour un train d'atterrissage, selon l'état de la technique, et à 682 mm, pour un train d'atterrissage, conforme aux caractéristiques de l'invention. Soit (h2) cette hauteur.

Il résulte de ces données numériques, que pour 19° de variation d'angle, au niveau des roues (5° en position d'atterrissage et 14° en position de décollage), on obtient une course d'amortissement de 156 mm dans le cas d'un train d'atterrissage selon l'état de la technique, et une course de 253 mm dans le cas d'un train d'atterrissage, conforme aux caractéristiques de l'invention.

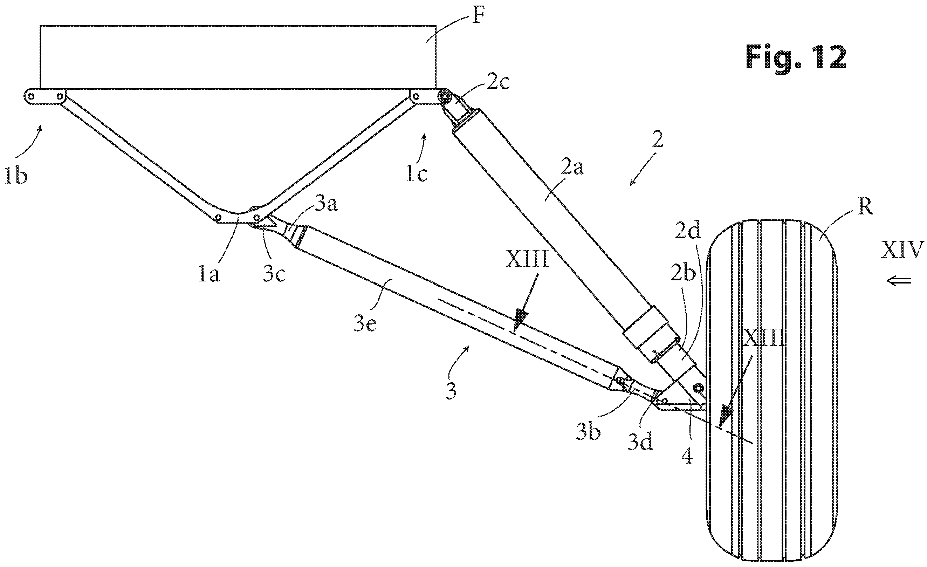

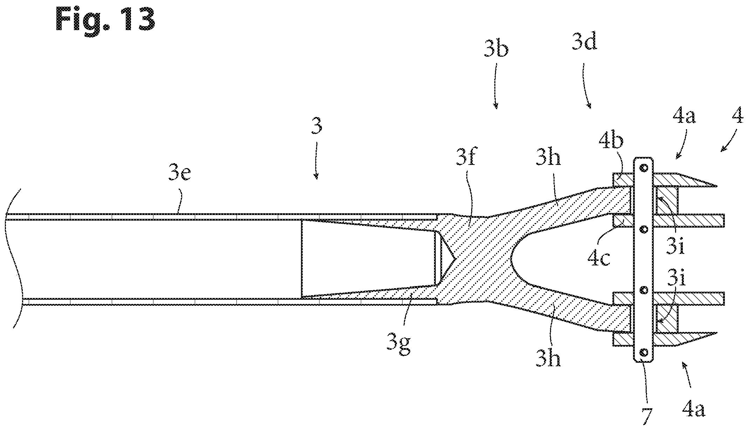

Un mode de réalisation préféré de la barre (3) est montré aux figures 12 et 13.

La barre (3) est constituée de trois pièces, à savoir une première pièce d'extrémité (3a) articulée au sommet (1a) à une extrémité supérieure (3c) de la barre (3), une deuxième pièce d'extrémité (3b) articulée sur la fusée (4) à une extrémité inférieure (3d) de la barre (3), et une pièce médiane (3e) reliant les pièces d'extrémité (3a) et (3b).

La pièce médiane (3e) a une forme de tube creux allongé, dans lequel sont fixées les pièces (3a) et (3b), de préférence par collage, ou par tout autre moyen adapté.

La pièce (3a) a une forme de tête de bielle articulée au sommet (1a) du renfort (1).

La pièce (3b) a une forme de fourche, avec un corps central (3f), une partie tubulaire (3g) fixée dans la pièce médiane (3e), et deux branches (3h) qui s'étendent depuis le corps (3f) à l'opposé de la partie tubulaire (3g). La fusée (4) comprend deux paires (4a) de pattes espacées (4b) et (4c). Chaque branche (3h) de la fourche est logée entre les pattes espacées (4b) et (4c) de l'une des paires (4a). Une tige (7) traverse les pattes (4b) et (4c) de chaque paire (4a), et un orifice (3i) formé dans chaque branche (3h) de la fourche. La tige (7) comporte des moyens de retenue, non représentés dans un but de simplification. Ainsi, la pièce (3b) en forme de fourche est connectée par la tige (7), avec capacité d'articulation, à la fusée (4) de la roue correspondante (R).

La tige (3) assure donc une double fonction de résistance à la traction et de résistance à la flexion, empêchant la rotation de la roue (R) autour de l'axe de l'organe amortisseur (2).

Le train d'atterrissage comprend également une barre arrière (6), montrée notamment aux figures 8, 9, 14 et 16, pour chaque roue (R). Cette barre (6) a une extrémité supérieure (6a) articulée par rapport au fuselage (F) et une extrémité inférieure (6b) articulée sur l'organe amortisseur (2).

La barre (6) est située en arrière par rapport à l'organe amortisseur (2) et à la barre de traction (3). La barre (6) est inclinée par rapport aux plans longitudinal, transversal et horizontal de l'avion.

De manière connue, les barres (6) permettent d'améliorer l'efficacité du train d'atterrissage.

A noter que le train d'atterrissage, tel que défini, peut être monté sur un support (5), apte à être fixé sur la partie correspondante du fuselage (F).

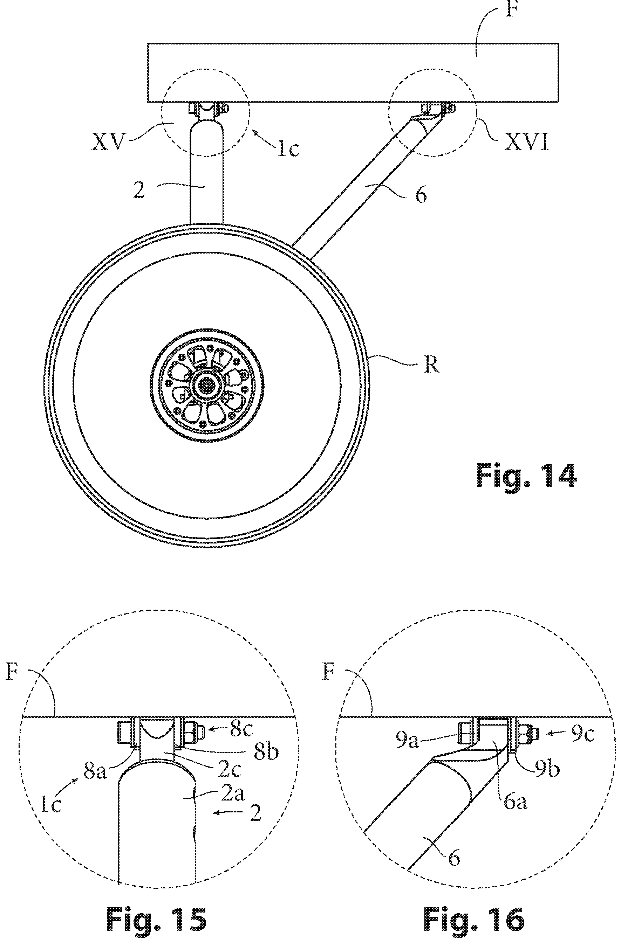

En alternative, le train d'atterrissage selon l'invention peut aussi être monté directement sur le fuselage (F) de l'avion, comme montré aux figures 14 à 16.

L'extrémité (2c) de l'organe amortisseur (2) est montée entre deux pattes espacées (8a) et (8b) solidaires du fuselage (F). Un dispositif de boulonnage (8c) permet de connecter cette extrémité (2c) aux pattes (8a) et (8b), avec capacité d'articulation.

De même, l'extrémité (6a) de la barre (6) est montée entre deux pattes espacées (9a) et (9b) solidaires du fuselage (F). Un dispositif de boulonnage (9c) permet de connecter cette extrémité (6a) aux pattes (9a) et (9b), avec capacité d'articulation.

Avantageusement, les pattes (8a), (8b), (9a) et (9b) peuvent être les éléments d'accroche d'origine équipant le fuselage de l'avion, de type Piper Cub ® ou similaire. Ainsi, le train d'atterrissage peut être monté sans modification des éléments d'accroche équipant le fuselage (F) d'origine.

Les avantages ressortent bien de la description, en particulier on souligne et on rappelle :
▪ absorption de l'énergie de l'impact, au lieu de la restituer, comme cela est cas selon les trains d'atterrissage conformes à l'état de la technique,
▪ amélioration de la sécurité lors de l'atterrissage,
▪ réduction des efforts encaissés par le fuselage au moment de l'atterrissage,
▪ diminution du ripage des pneumatiques au moment de l'atterrissage.

## Revendications

1. Train d'atterrissage pour avion léger, comprenant au moins deux roues (R), apte à être fixé sur une partie de fuselage (F) à l'avant du centre de gravité de l'avion léger, et présentant un renfort (1) tubulaire fixe de forme générale triangulaire ayant un sommet (1a) dirigé vers le bas et une base positionnée vers le haut, les extrémités (1b, 1c) de la base et le sommet (1a) du renfort (1) étant accouplés, avec capacité d'articulation, à un système de suspension (2, 3) relié aux roues (R), chaque extrémité (1b, 1c) de la base du renfort (1) étant accouplée angulairement à une roue (R), au moyen d'un organe amortisseur (2), tandis que le sommet (1a) dudit renfort (1) est accouplé symétriquement à chacune des roues (R), au moyen d'une barre de traction (3), chaque barre de traction (3) ayant une première extrémité (3c) accouplée avec capacité d'articulation au sommet (1a) du renfort (1) et une deuxième extrémité (3d) accouplée avec capacité d'articulation à un agencement fixe (4) de la roue correspondante (R) ; ladite deuxième extrémité (3d) de la barre de traction (3) formant une fourche comprenant deux branches (3h) connectées par une tige (7) à deux paires (4a) de pattes espacées (4b et 4c) que comprend l'agencement fixe (4) de la roue correspondante (R), chaque branche (3h) de la fourche étant logée entre les pattes espacées (4b et 4c) que comprend l'une des paires (4a) de pattes.

2. Train d'atterrissage selon l'une des revendications précédentes, ***caractérisé* en ce que** chaque organe amortisseur (2) a une première extrémité (2c) accouplée avec capacité d'articulation aux extrémités (1b, 1c) de la base du renfort (1).

3. Train d'atterrissage selon la revendication 2, ***caractérisé* en ce que** la première extrémité (2c) de chaque organe amortisseur (2) est accouplée avec capacité d'articulation, aux extrémités (1b, 1c) de la base du renfort (1), entre deux pattes espacées (8a, 8b) solidaires du fuselage (F).

4. Train d'atterrissage selon l'une des revendications 2 ou 3, ***caractérisé* en ce que** chaque organe amortisseur (2) a une deuxième extrémité (2d) accouplée angulairement, d'une manière fixe, à un agencement (4) de la roue (R).

5. Train d'atterrissage selon l'une des revendications 2 ou 3, ***caractérisé* en ce que** chaque organe amortisseur (2) a une deuxième extrémité (2d) accouplée angulairement, d'une manière articulée, à un agencement (4) de la roue (R).

6. Train d'atterrissage selon l'une quelconque des revendications précédentes, ***caractérisé* en ce que** l'organe amortisseur (2) est un vérin, constitué par un fut (2a) articulé aux extrémités (1b, 1c) de la base du renfort (1), et une tige coulissante (2b) accouplée à un agencement (4) de la roue (R).

7. Avion léger, ***caractérisé* en ce qu'**il comprend un train d'atterrissage selon l'une des revendications 1 à 6.

8. Avion léger selon la revendication 7, ***caractérisé* en ce que** le train d'atterrissage est monté sur des éléments d'accroché d'origine (8a, 8b ; 9a, 9b) équipant la partie de fuselage.

9. Avion léger selon la revendication 7, ***caractérisé* en ce que** le train d'atterrissage est monté sur un support indépendant (5), apte à être fixé sur la partie du fuselage.

## Patentansprüche

1. Fahrwerk für Leichtflugzeug, das mindestens zwei Räder (R) enthält, das an einem Teil des Rumpfes (F) vorne am Schwerpunkt des Leichtflugzeugs befestigt werden kann, und eine rohrförmige, feste Verstärkung (1) aufweist, mit einer dreieckigen allgemeinen Form mit einer Spitze (1a), die nach unten gerichtet ist und einer Basis, die nach oben positioniert ist, die Endstücke (1b, 1c) der Basis und die Spitze (1a) der Verstärkung (1) sind gelenkig mit einem Aufhängungssystem (2, 3) verbunden, das mit den Rädern (R) verbunden ist, jedes Endstück (1b, 1c) der Basis der Verstärkung (1) ist abgewinkelt mit einem Rad (R) verbunden, über ein Dämpfungselement (2), während die Spitze (1a) dieser Verstärkung (1) symmetrisch mit jedem der Räder (R) über eine Zugstange (3) verbunden ist, jede Zugstange (3) verfügt über ein erstes Endstück (3c), das gelenkig mit der Spitze (1a) der Verstärkung (1) verbunden ist und ein zweites Endstück (3d), das gelenkig mit einer festen Vorrichtung (4) des entsprechenden Rades (R) verbunden ist; dieses zweite Endstück (3d) der Zugstange (3) bildet dabei eine Gabel, mit zwei Ästen (3h) die durch eine Stange (7) mit zwei Paar (4a) im Abstand angeordnete Laschen (4b und 4c) verbunden ist, die in der festen Vorrichtung (4) des entsprechenden Rades (R) enthalten sind, jeder Ast (3h) der Gabel ist zwischen den im Abstand angeordneten Laschen (4b) und (4c) eines der Laschenpaare (4a) angeordnet.

2. Fahrwerk nach irgendeinem der vorangehenden Ansprüche, ***dadurch gekennzeichnet, dass*** jedes Dämpferelement (2) über ein erstes Endstück (2c) verfügt, das gelenkig mit den Endstücken (1b, 1c) der Verstärkungsbasis (1) verbunden ist.

3. Fahrwerk nach Anspruch 2, ***dadurch gekennzeichnet, dass*** das erste Endstück (2c) jedes Dämpferelementes (2) gelenkig mit den Endstücken (1b, 1c) der Verstärkungsbasis (1) verbunden ist, zwischen zwei im Abstand angeordneten, fest mit dem Rumpf (F) verbundenen Laschen (8a, 8b).

4. Fahrwerk nach irgendeinem der vorangehenden Ansprüche 2 oder 3, ***dadurch gekennzeichnet, dass*** jedes Dämpferelement (2) über ein zweites Endstück (2d) verfügt, das im Winkel und fest mit einer Vorrichtung (4) des Rades (R) verbunden ist.

5. Fahrwerk nach irgendeinem der vorangehenden Ansprüche 2 oder 3, ***dadurch gekennzeichnet, dass*** jedes Dämpferelement (2) über ein zweites Endstück (2d) verfügt, das im Winkel und gelenkig mit einer Vorrichtung (4) des Rades (R) verbunden ist.

6. Fahrwerk nach irgendeinem der vorangehenden Ansprüche, ***dadurch gekennzeichnet, dass*** es sich bei dem Dämpferelement (2) um einen Zylinder handelt, bestehend aus einem Gebinde (2a), gelenkig verbunden mit den Endstücken (1b, 1c) der Verstärkungsbasis (1), und einer verschiebbaren Stange (2b), die mit einer Vorrichtung (4) des Rades (R) verbunden ist.

7. Leichtflugzeug, ***dadurch gekennzeichnet, dass es*** ein Fahrwerk nach irgendeinem der Ansprüche 1 bis 6 enthält

8. Leichtflugzeug nach Anspruch 7, ***dadurch gekennzeichnet, dass*** das Fahrwerk an den ursprünglichen Befestigungselementen (8a, 8b, 9a, 9b) montiert ist, mit denen der Rumpfteil ausgerüstet ist.

9. Leichtflugzeug nach Anspruch 7, ***dadurch gekennzeichnet, dass*** das Fahrwerk auf einem unabhängigen Träger (5) montiert ist, der am Rumpfteil befestigt werden kann.

## Claims

1. Landing gear for light aircraft, comprising at least two wheels (R) adapted to be fixed onto a part of the fuselage (F) in front of the center of gravity of the light aircraft, and having a fixed tubular reinforcement (1) of general triangular shape having an apex (1a) directed downward and a base positioned upward, the ends (1b, 1c) of the base and the apex (1a) of the reinforcement (1) being coupled with articulation capability to a suspension system (2, 3) linked to the wheels (R), each end (1b, 1c) of the of the base of the reinforcement (1) being angularly coupled to a wheel (R), by means of a damping member (2), while the apex (1a) of said reinforcement (1) is symmetrically coupled to each of the wheels (R) by means of a connecting rod (3), each connecting rod (3) having a first end (3c) coupled with articulation capability to the apex (1a) of the reinforcement (1) and a second end (3d) coupled with articulation capability to a fixed fitting (4) of the corresponding wheel (R);
said second end (3d) of the connecting rod (3) forming a fork with two branches (3h) connected by a rod (7) to two pairs (4a) of spaced lugs (4b and 4c) of the fixed fitting (4) of the corresponding wheel (R), each branch (3h) of the fork being housed between the spaced lugs (4b and 4c) of one of the pairs (4a).

2. Landing gear according to any one of the preceding claims, ***characterized* in that** each damping member (2) has a first end (2c) coupled with articulation capability to the ends (1b, 1c) of the base of the reinforcement (1).

3. Landing gear according to claim 2, ***characterized* in that** the first end (2c) of each damping member (2) is coupled with articulation capability to the ends (1b, 1c) of the base of the reinforcement (1) between two spaced lugs (8a, 8b) rigidly connected with the fuselage (F).

4. Landing gear according to one of claims 2 or 3, ***characterized* in that** each damping member (2) has a second end (2d) angularly coupled fixedly to a fitting (4) of the wheel (R).

5. Landing gear according to one of claims 2 or 3, ***characterized* in that** each damping member (2) has a second end (2d) angularly coupled, with articulation capability, to a fitting (4) of the wheel (R).

6. Landing gear according to any one of the preceding claims, ***characterized* in that** the damping member (2) is a hydraulic cylinder, made up of a barrel (2a) articulated to the ends (1b, 1c) of the base of the reinforcement (1), and a sliding rod (2b) coupled to a fitting (4) of the wheel (R).

7. A light aircraft ***characterized* in that** it comprises a landing gear according to any one of claims 1 to 6.

8. A light aircraft according to claim 7, ***characterized* in that** the landing gear is mounted on the original attachment elements (8a, 8b; 9a, 9b) equipping the fuselage part.

9. A light aircraft according to claim 7, ***characterized* in that** the landing gear is mounted on an independent support (5) which could be attached on the part of the fuselage.
